Europäisches Patentamt

European Patent Office

Office européen des brevets

(19)

(11) EP 0 793 873 B1

(12) **EUROPÄISCHE PATENTSCHRIFT**

(45) Veröffentlichungstag und Bekanntmachung des Hinweises auf die Patenterteilung:
**03.06.1998 Patentblatt 1998/23**

(21) Anmeldenummer: 95936431.6

(22) Anmeldetag: 10.11.1995

(51) Int Cl.$^6$: **H02M 7/48**, H02J 3/18

(86) Internationale Anmeldenummer:
**PCT/DE95/01557**

(87) Internationale Veröffentlichungsnummer:
**WO 96/16469 (30.05.1996 Gazette 1996/25)**

(54) **VERFAHREN UND VORRICHTUNG ZUR REDUZIERUNG VON OBERSCHWINGUNGS-NETZRÜCKWIRKUNGEN EINES SELBSTGEFÜHRTEN MULTILEVEL-WECHSELRICHTERS**

METHOD AND DEVICE FOR REDUCING HARMONICS SYSTEM PERTURBATIONS IN A SELF-COMMUTATED MULTILEVEL INVERTER

PROCEDE ET DISPOSITIF PERMETTANT DE REDUIRE LES PERTURBATIONS DU SYSTEME D'HARMONIQUES D'UN ONDULEUR A NIVEAUX MULTIPLES AUTOCOMMUTE

(84) Benannte Vertragsstaaten:
**DE FR GB**

(30) Priorität: **23.11.1994 DE 4441758**

(43) Veröffentlichungstag der Anmeldung:
**10.09.1997 Patentblatt 1997/37**

(73) Patentinhaber: **SIEMENS AKTIENGESELLSCHAFT**
**80333 München (DE)**

(72) Erfinder:
• SCHETTLER, Frank
 D-91054 Erlangen (DE)

• TYLL, Heinz
 D-91056 Erlangen (DE)

(56) Entgegenhaltungen:
**EP-A- 0 581 322     US-A- 4 264 951**

• **PROCEEDINGS OF THE ANNUAL POWER ELECTRONICS SPECIALISTS CONFERENCE (PESC), TOLEDO, JUNE 29 - JULY 3, 1992, Bd. 1, 29.Juni 1992 INSTITUTE OF ELECTRICAL AND ELECTRONICS ENGINEERS, Seiten 521-529, XP 000369067 WUEST D ET AL 'A COMPARISON OF DIFFERENT CIRCUIT CONFIGURATIONS FOR AN ADVANCED STATIC VAR COMPENSATOR (ASVC)'**

**Beschreibung**

Die Erfindung bezieht sich auf ein Verfahren zur Reduzierung von Oberschwingungs-Netzrückwirkungen eines selbstgeführten, grundfrequenzgetakteten Multilevel-Wechselrichters mit kapazitiven Speichern.

Der Aufbau mehrerer selbstgeführter grundfrequenzgetakteter Multilevel-Wechselrichter mit kapazitiven Speichern ist in einer früheren Gebrauchsmuster-Anmeldung mit dem Aktenzeichen G 94 16 048.1 dargestellt und deren Arbeitsweise ausführlich beschrieben. Ein derartiger Multilevel-Wechselrichter wird beispielsweise bei einer Blindleistungs-Kompensationseinrichtung verwendet, die als "Static Var Generator (SVG)" oder als "Advanced Static Var Compensator (ASVC)" oder als "Static Condenser (STATCON)" bezeichnet wird. Siehe dazu auch Konferenzbericht PESC'92 (Toledo, 29.6-3.7.1992) Seiten 521-528.

Durch die Wahl der Zu- und Abschaltzeitpunkte der einzelnen Spannungsstufen dieses Multilevel-Wechselrichters kann das Spektrum der drehstromseitigen Wechselrichter-Ausgangsspannung verändert werden. Je mehr Spannungsstufen dieser Multilevel-Wechselrichter aufweist, umso mehr Harmonische in der drehstromseitigen Wechselrichter-Ausgangsspannung können unterdrückt werden. So kann beispielsweise mit elf Spannungsstufen eines 12-pulsigen Multilevel-Wechselrichters die 11., 13., 23., 25. und 35. Harmonische unterdrückt werden. Somit ist die niedrigste Harmonische, die dann in ein Drehstromnetz abgegeben wird, die 37. Harmonische. Ein derartiger Multilevel-Wechselrichter erzeugt eine Wechselrichter-Ausgangsspannung, die einen bestimmten Grundschwingungsgehalt hat.

Die Grundschwingung der drehstromseitigen Wechselrichter-Ausgangsspannung legt die Anschlußspannung des Multilevel-Wechselrichters fest. Praktisch wird dadurch das Übersetzungsverhältnis des Stromrichtertransformators bestimmt.

Somit existiert für einen Arbeitspunkt des Multilevel-Wechselrichters eine optimale Systemabstimmung mit minimaler Oberschwingungs-Netzrückwirkung.

Werden nun die Zu- und Abschaltzeitpunkte der einzelnen Spannungsstufen verändert, so ändert sich auch die Anschlußspannung des Multilevel-Wechselrichters. Infolge dieser Änderung fließt ein Netzstrom, der in seiner Amplitude angestiegen und dessen zeitlicher Verlauf verzerrt ist. Ein derartiger Strom kann zur Abschaltung des Multilevel-Wechselrichters und damit zur sprunghaften Änderung der Blindleistung im Drehstromnetz führen.

Der Erfindung liegt nun die Aufgabe zugrunde, ein Verfahren und eine Vorrichtung zur Reduzierung von Oberschwingungs-Netzrückwirkungen eines selbstgeführten Multilevel-Wechselrichters mit kapazitiven Speichern anzugeben, womit das aufgezeigte Problem gelöst wird.

Diese Aufgabe wird erfindungsgemäß mit den Merkmalen des Anspruchs 1 (Verfahren) bzw. des Anspruchs 4 (Vorrichtung) gelöst.

Dadurch, daß einerseits die Winkelwerte für Zu- und Abschaltzeitpunkte der einzelnen Spannungsstufen des Multilevel-Wechselrichters beim Verlassen eines vorbestimmten Arbeitspunktes für einen neuen ermittelten Arbeitspunkt in Abhängigkeit minimaler Oberschwingungs-Netzrückwirkungen berechnet werden und andererseits die Anschlußspannung dieses Multilevel-Wechselrichters an die geänderte Grundschwingungs-Amplitude der Wechselrichter-Ausgangsspannung angepaßt wird, bleibt die Amplitude des Netzstromes und dessen zeitlicher Verlauf annähernd unverändert. Dadurch entfällt eine Abschaltung des Multilevel-Wechselrichters.

Mit diesem Verfahren kann man für jeden sich neu einstellenden Arbeitspunkt eines Multilevel-Wechselrichters Winkelwerte für Zu- und Abschaltzeitpunkte der einzelnen Spannungsstufen des Multilevel-Wechselrichters für minimale Netzrückwirkungen und Anpassungsänderungswerte ermitteln, so daß der Wechselrichter mit reduzierten Oberschwingungs-Netzrückwirkungen in Betrieb bleiben kann.

Bei einem vorteilhaften Verfahren sind Winkelwerte und Anpassungsänderungswerte für mehrere Arbeitspunkte vorberechnet und abgespeichert, so daß nur noch der neue Arbeitspunkt in Abhängigkeit von ermittelten Meßwerten ermittelt werden muß. Eine Optimierung bezüglich mehrerer Arbeitspunkte findet off-line statt.

Die Vorrichtung zur Durchführung des Verfahrens zur Reduzierung von Oberschwingungs-Netzrückwirkungen eines selbstgeführten Wechselrichters mit kapazitiven Speichern besteht aus einer Einrichtung zur Anpassung der Anschlußspannung dieses Multilevel-Wechselrichters an die veränderte Wechselrichter-Ausgangsspannung und einem Programm für die vorhandene Steuer- und Regeleinrichtung des Wechselrichters. Diese Einrichtung zur Anpassung ist zwischen den drehstromseitigen Ausgängen des Multilevel-Wechselrichters und einem Drehstromnetz angeordnet, wobei ein Steuereingang und ein Meldeausgang dieser Einrichtung mit der Steuer- und Regeleinrichtung verbunden sind.

Bei einer vorteilhaften Vorrichtung ist die Einrichtung zur Anpassung Bestandteil eines vorhandenen Stromrichtertransformators.

Bei einer weiteren vorteilhaften Vorrichtung ist die Steuer- und Regeleinrichtung jeweils mit einem Speicher für die Winkelwerte und für die Anpassungsänderungswerte versehen. Dadurch kann durch Austauschen dieser Speicher der Multilevel-Wechselrichter kundenspezifisch off-line programmiert werden.

Ausführungsbeispiele der Erfindung sind in den Zeichnungen schematisch dargestellt und werden im folgenden näher erläutert.

Figur 1             zeigt ein prinzipielles Blockschaltbild einer ersten Ausführungsform der erfindungsgemäßen Vorrichtung für einen Multilevel-Wechselrichter, die

Figur 2      zeigt ein einphasiges Ersatzschaltbild des Blockschaltbildes nach Figur 1, die

Figur 3      zeigt eine vorteilhafte Ausführungsform des Multilevel-Wechselrichters, in der

Figur 4      sind in einem Diagramm über der Zeit eine Leiter-Mittelpunktspannung der beiden Multilevel-Wechselrichter der Wechselrichteranlage nach Figur 3 dargestellt, wobei in

Figur 5      die zugehörigen Ströme in einem Diagramm über der Zeit dargestellt sind, die

Figur 6      zeigt in einem Diagramm die Wechselrichter-Ausgangsspannungen bezogen auf den Sternpunkt des Drehstromnetzes und die

Figuren 7 und 8      zeigen die Verläufe der Netzströme jeweils in einem Diagramm.

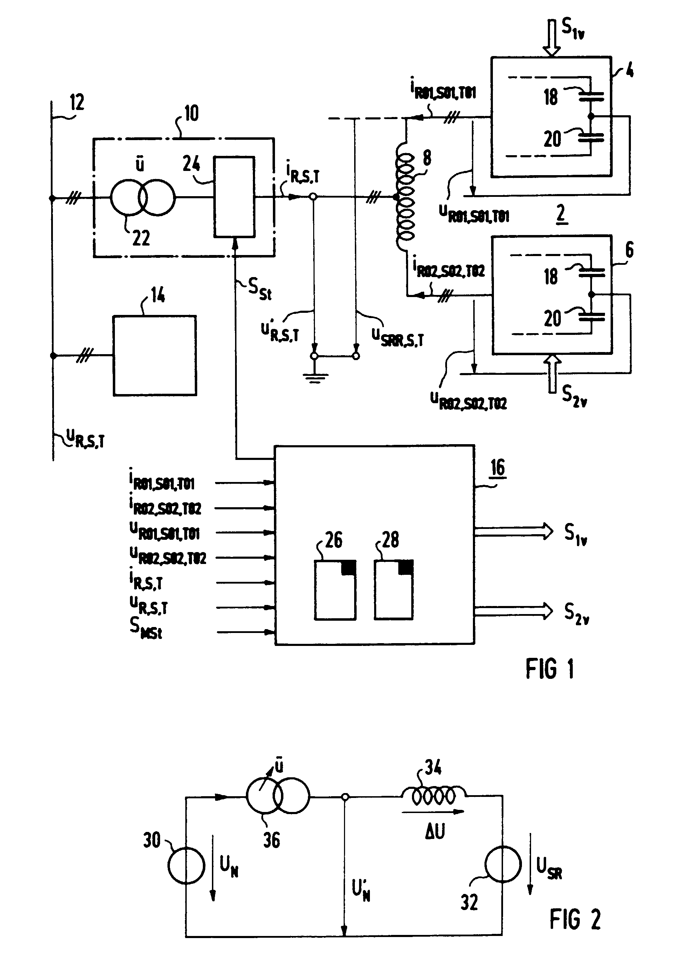

Gemäß dem prinzipiellen Blockschaltbild der Figur 1 besteht die Multilevel-Wechselrichteranlage 2 aus zwei Multilevel-Wechselrichtern 4 und 6, die ausgangsseitig über eine Drehstrom-Saugdrosselschaltung 8 miteinander verknüpft sind. Der drehstromseitige Ausgang der Drehstrom-Saugdrosselschaltung 8 ist über eine Einrichtung 10 zur Anpassung der Anschlußspannung $u'_{R,S,T}$ der Multilevel-Wechselrichteranlage 2 an seine veränderbare Wechselrichter-Ausgangsspannung $u_{S.RR,S,T}$, die aus den Ausgangsspannungen $u_{R01,S01,T01}$ bzw. $u_{R02,S02,T02}$ der Multilevel-Wechselrichter 4 und 6 zusammengesetzt ist, mit einem Drehstromnetz 12 verknüpft, an dem eine weitere Last 14 angeschlossen ist. Außerdem gehört zur Wechselrichteranlage 2 eine Steuer- und Regeleinrichtung 16, die die Steuersignale $S_{1\nu}$ und $S_{2\nu}$ für die beiden Multilevel-Wechselrichter 4 und 6 generiert. Der Aufbau und die Funktionsweise des hier verwendeten Multilevel-Wechselrichters 4 bzw.6 mit kapazitiven Speichern 18 und 20 ist in einer früheren Gebrauchsmuster-Anmeldung mit dem Aktenzeichen G 94 16 048.1 ausführlich beschrieben. Die Einrichtung 10 zur Anpassung besteht beispielsweise aus einem Transformator 22 und einem Stufenschalter 24, der über eine Signalleitung mit der Steuer- und Regeleinrichtung 16 verbunden ist. Diese Steuer- und Regeleinrichtung 16 erzeugt in Abhängigkeit vom Zustandssignal $S_{MSt}$ des Stufenschalters 24 und von Strom- und Spannungsmeßwerten $i_{R01,S01,T01}$, $i_{R02,S02,T02}$, $i_{R,S,T}$, $u_{R01,S01,T01}$, $U_{R02,S02,T02}$ und $U_{R,S,T}$ der Multilevel-Wechselrichter 4 und 6 und des Drehstromnetzes 12 einerseits die Steuersignale $S_{1\nu}$ und $S_{2\nu}$ der Multilevel-Wechselrichter 4 und 6 und andererseits ein Stellsignal $S_{St}$ für den Stufenschalter 24 der Einrichtung 10. Damit der Mikroprozessor der Steuer- und Regeleinrichtung 16 entlastet wird, ist diese Einrichtung 16 mit zwei Speichern 26 und 28 versehen, in denen für mehrere Arbeitspunkte der Multilevel-Wechselrichter 4,6 jeweils m Winkelwerte für Zu- und Abschaltzeitpunkte der m Spannungsstufen der Multilevel-Wechselrichter 4,6 und jeweils mehrere Anpassungsänderungswerte abgespeichert sind. Durch die Verwendung dieser Speicher 26 und 28 können die Winkelwerte und die Anpassungs-Anderungswerte offline für unterschiedliche Anlagen berechnet und optimiert werden.

Die Figur 2 zeigt ein einphasiges Ersatzschaltbild der dreiphasigen Vorrichtung nach Figur 1. Das Drehstromnetz 12 wird durch eine Spannungsquelle 30 dargestellt, die die Netzspannung $U_N$ einprägt. Die Multilevel-Wechselrichter 4 und 6 werden ebenfalls durch eine Spannungsquelle 32 dargestellt, die eine Wechselrichter-Ausgangsspannung $U_{SR}$ einprägt. Die Drehstrom-Saugdrosselschaltung 8 ist durch eine Impedanz 34 ersetzt, wogegen die Einrichtung 10 durch einen Transformator 36 mit verstellbarer Übersetzung ü dargestellt ist. Für einen vorbestimmten Arbeitspunkt prägt die Spannungsquelle 32 eine Spannung $U_{SR}$ ein. Die Grundschwingung dieser Spannung $U_{SR}$ legt die Anschlußspannung $U'_N$ der Multilevel-Wechselrichteranlage 2 fest, wodurch das Übersetzungsverhältnis des Transformators 36 bestimmt ist. Durch die Wahl des Übersetzungsverhältnisses werden die einpragenden Spannungen $U'_N$ und $U_{SR}$ aufeinander abgestimmt. Die drehstromseitige Anschlußspannung $U'_N$ der Wechselrichteranlage 2 ist gegenüber der einpragenden Wechselrichter-Ausgangsspannung $U_{SR}$ um den Spannungsabfall $\Delta U$ an der Impedanz 34 verschieden. Werden nun die Winkelwerte für Zu- und Abschaltzeitpunkte der einzelnen Spannungsstufen der Multilevel-Wechselrichter 4,6 geändert, so ändert sich auch die einprägende Wechselrichter-Ausgangsspannung $U_{SR}$. Die einprägende Netzspannung $U_N$ ist konstant, so daß, wenn die Anschlußspannung $U'_N$ der Multilevel-Wechselrichteranlage 2 nicht an die geänderte einprägende Wechselrichter-Ausgangsspannung $U_{SR}$ angepaßt wird, sich der Netzstrom I entsprechend dem sich ändernden Spannungsabfall $\Delta U$ an der Impedanz 34 verändert, so daß diese Veränderung des Stromes I zur Abschaltung der Multilevel-Wechselrichter 4,6 führen kann.

Mit dem erfindungsgemäßen Verfahren und einer Vorrichtung zur Durchführung dieses Verfahrens kann man bei Änderung eines vorbestimmten Arbeitspunktes der Wechselrichteranlage 2 einerseits die Winkelwerte für Zu- und Abschaltzeitpunkte der einzelnen Spannungsstufen der Multilevel-Wechselrichter 4,6 derart verändern, daß die Wechselrichter-Ausgangsspannung $U_{SR}$ ein optimiertes Oberschwingungs-Spektrum aufweist, und andererseits die Anschlußspannung $U'_N$ dieser Wechselrichteranlage 2 an die geänderte Grundschwingungs-Amplitude der Wechselrichter-Ausgangsspannung $U_{SR}$ angepaßt wird, so daß sich der Netzstrom I nur unwesentlich verändert. Das heißt, die Oberschwingungs-Netzrückwirkungen einer selbstgeführten Wechselrichteranlage 2 können für beliebige Arbeitspunkte minimal gehalten werden.

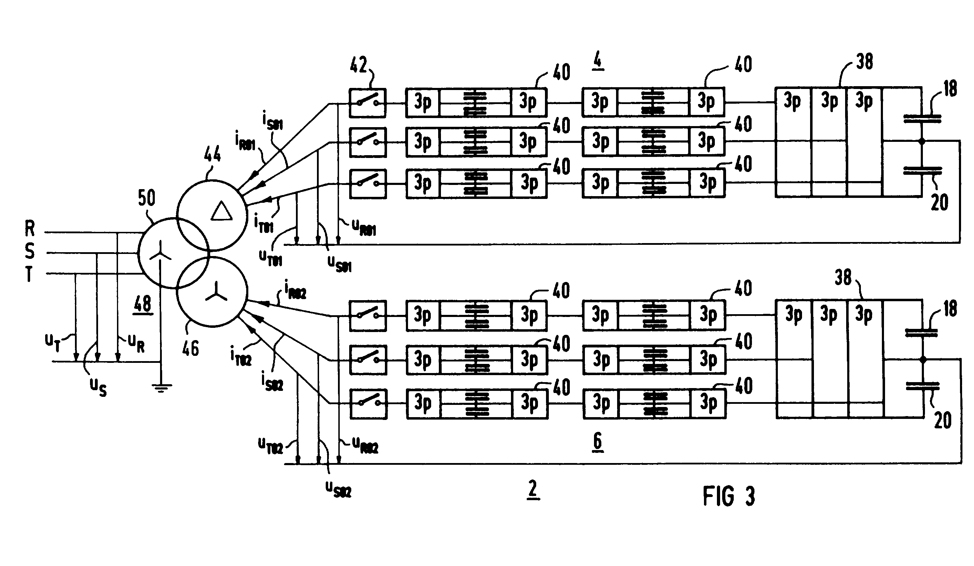

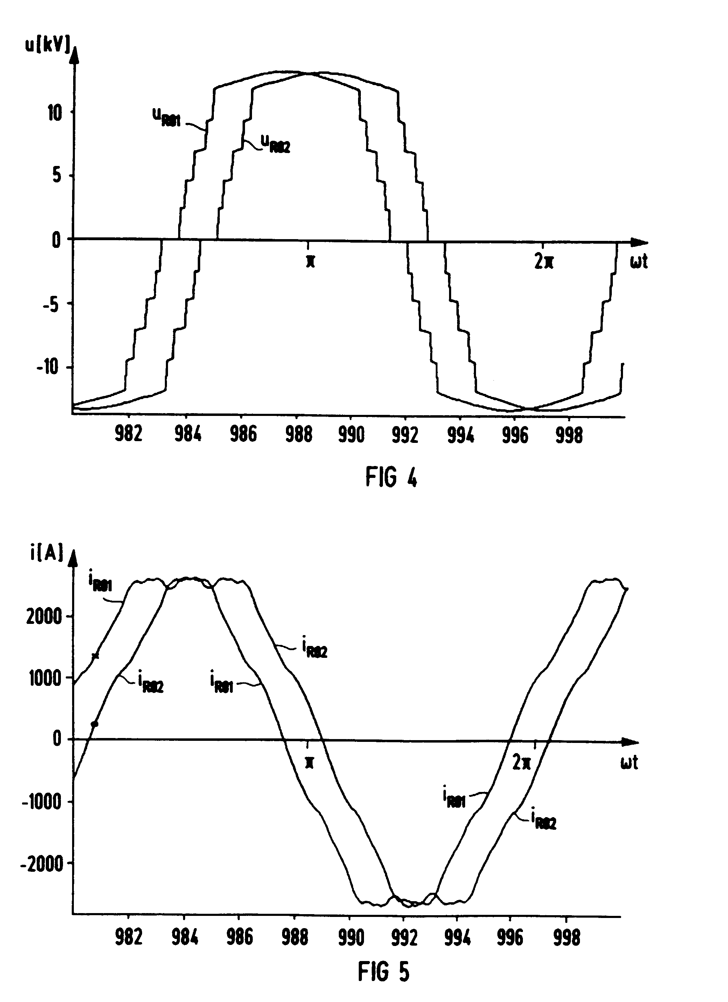

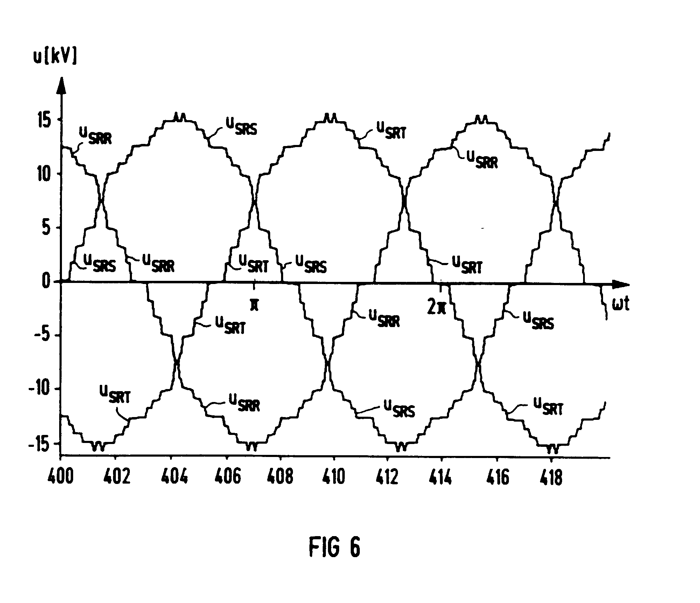

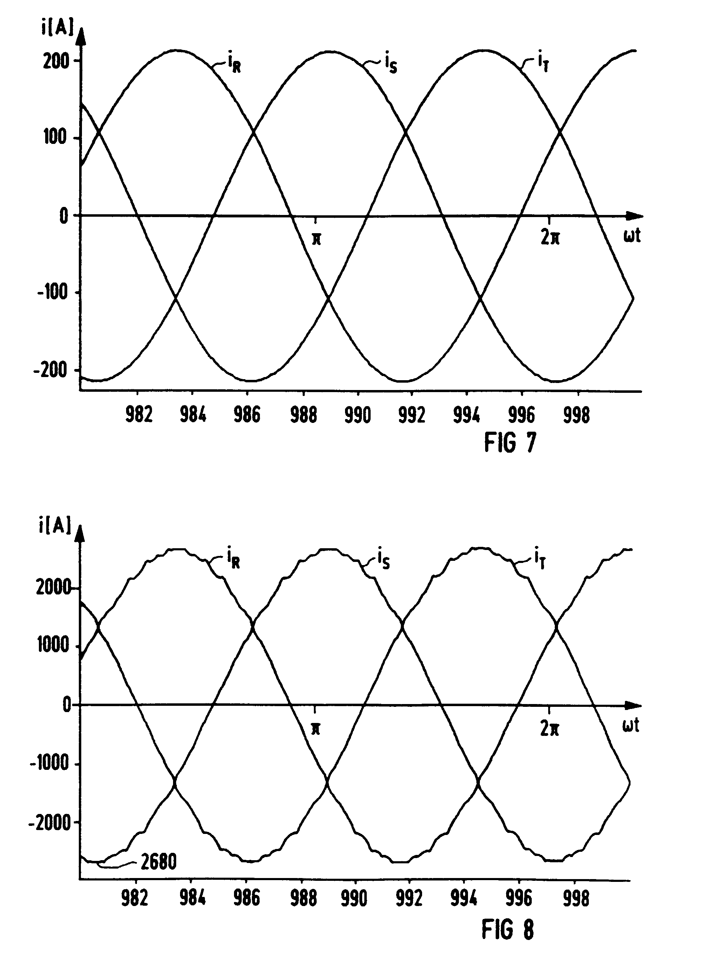

Die Figur 3 zeigt eine vorteilhafte Ausführungsform der Wechselrichteranlage 2. Jeder Multilevel-Wechselrichter 4 und 6 besteht aus einem 6-pulsigen Dreipunkt-Wechselrichter 38 und jeweils zwei Doppelkaskaden 40 pro Phase. Die Doppelkaskaden 40 sind jeweils mit Schalteinrichtungen versehen, die ebenfalls dreipunktmäßig ausgeführt sind. Die Ausgänge der Multilevel-Wechselrichter 4 bzw. 6 sind jeweils über einen Leistungsschalter 42 mit einer Sekundärwicklung 44 bzw. 46 eines Dreiwicklungstransformators 48 mit der Schaltgruppe Yyd verknüpft. Die Primärwicklung 50 ist mit dem Drehstromnetz 12 verbunden. Durch die Verwendung zweier Doppelkaskaden 40 und eines 6-pulsigen Dreipunkt-Wechselrichters 38 erhält man einen 11-Level-Wechselrichter 4 bzw. 6. Mittels des Dreiwicklungstransformators 48 mit der angegebenen Schaltgruppe entsteht aus zwei 6-pulsigen 11-Level-Wechselrichtern 4 und 6 eine 12-pulsige 11-Level-Wechselrichteranlage 2. Die charakteristischen Harmonischen einer 12-pulsigen Wechselrichteranlage sind die 11., 13., 23., 25., 35., 37., 47., 49.,... Harmonische. Jeder 11-Level-Wechselrichter 4 und 6 ermöglicht zusätzlich die Unterdrückung von fünf Harmonischen. Dies kann genutzt werden, um die 11., 13., 23., 25. und 35. Harmonische zu unterdrükken. Dazu werden die Winkelwerte für Zu- und Abschaltzeitpunkte der elf Spannungsstufen des Wechselrichters 4 und 6 so bestimmt, daß die 11., 13., 23., 25. und 35. Harmonische der beiden 6-pulsigen Wechselrichter 4 und 6 unterdrückt werden. Somit erhält die Wechselrichter-Ausgangsspannung $u_{R01,S01,T01}$ und $u_{R02,S02,T02}$ der beiden 6-pulsigen Wechselrichter 4 und 6 jeweils die 5., 7., 17., 19., 29., 31., 37., 41., 43 Harmonische. Durch die Wahl des Dreiwicklungstransformators 48 werden die 5., 7., 17., 19., 29., 31., 41., 43 Harmonische ausgelöscht, so daß die niedrigste Oberschwingung, die dann in das Netz 12 abgegeben wird, die 37. Harmonische ist. Der zugehörige Netzstrom $i_{R,S,T}$ ist in einem Diagramm der Figur 7 dargestellt. In einem Diagramm der Figur 4 ist die Leiter-Mittelpunkt-Spannung $u_{R01}$ und $u_{R02}$ der Phase R der 11-Level-Wechselrichter 4 und 6 dargestellt. Die zugehörigen Phasenströme $i_{R01}$ und $i_{R02}$ sind in dem Diagramm der Figur 5 dargestellt. Die drehstromseitigen Wechselrichter-Ausgangsspannungen $u_{SRR,S,T}$, die aus den Ausgangsspannungen $u_{R01,S01,T01}$ bzw. $u_{R02,S02,T02}$ der Multilevel-Wechselrichter 4 und 6 gebildet werden und auf den Sternpunkt des Drehstromnetzes 12 bezogen sind, sind im Diagramm der Figur 6 dargestellt.

Wie das Diagramm der Figur 7 zeigt, erhält man mit einer 12-pulsigen 11-Level-Wechselrichteranlage 2 einen Netzstrom $i_{R,S,T}$, der als niedrigste Harmonische die 37. Harmonische aufweist. Würde man den Aufwand für die Multilevel-Wechselrichteranlage 2 auf einen 7-Level-Wechselrichter beschränken, d.h., es wird pro Phase der Multilevel-Wechselrichter 4 und 6 auf eine Doppelkaskade 40 verzichtet, so erhält der Netzstrom $i_{R,S,T}$ als niedrigste Harmonische die 25. Harmonische.

Fällt zum Beispiel einer der beiden 6-pulsigen 11-Level-Wechselrichter 4 und 6 aus, so können die 5., 7., 17., 19., 29., 31.,... Harmonische nicht mehr mit Hilfe des Dreiwicklungstransformators 48 mit der angegebenen Schaltgruppe ausgelöscht werden. Das heißt, durch Ausfall eines 6-pulsigen Teilwechselrichters 4 oder 6 geht die 12-Pulsigkeit der Wechselrichteranlage 2 verloren. Würde man jetzt die Ansteuerung nicht verändern, so würde die niedrigste Harmonische im Netzstrom $i_{R,S,T}$ nun die 5. Harmonische sein. Somit würde sich die Oberschwingungs-Netzrückwirkung der Multilevel-Wechselrichteranlage 2 sprunghaft ändern.

Verändert man die Winkelwerte für Zu- und Abschaltzeitpunkte der elf Spannungsstufen des Multilevel-Wechselrichters 4 oder 6 derart, daß die ersten fünf auftretenden Harmonischen des 6-pulsigen 11-Level-Wechselrichters 4 oder 6 unterdrückt werden, so ist die niedrigste Oberschwingung, die dann in das Drehstromnetz 12 abgegeben wird, die 19. Harmonische (Figur 8). Das heißt, durch Änderung der Winkelwerte für Zu- und Abschaltzeitpunkte für die elf Spannungsstufen des Teilwechselrichters 4 oder 6 kann die Oberschwingungs-Netzrückwirkung des 11-Level-Wechselrichters 2 wesentlich reduziert werden. Diese Veränderung der Aussteuerung des Multilevel-Wechselrichters 4 oder 6 bewirkt aber auch eine Veränderung der Grundschwingungs-Amplitude der Wechselrichter-Ausgangsspannung $u_{SRR,S,T}$. Wird nun die Anschlußspannung $u'_{R,S,T}$ der Wechselrichteranlage 2 nicht an die Veränderung der einprägenden Wechselrichter-Ausgangsspannung $u_{SRR,S,T}$ angepaßt, so schaltet die Wechselrichteranlage 2 aufgrund eines zu hohen Stromes I ab. Die Anpassung erfolgt mit dem Stufenschalter 24 der Einrichtung 10 oder der Stufenschalter 24 ist Bestandteil des Dreiwicklungstransformators 48. Das entsprechende Stellsignal $S_{St}$ wird von der Steuer- und Regeleinrichtung 16 in Abhängigkeit der anstehenden Istwerte berechnet oder aber aus einem Speicher 28, der vorberechnete Werte enthält, abgerufen. Der Istzustand dieses Stufenschalters 24 wird mittels eines Zustandssignals $S_{MSt}$ der Steuer- und Regeleinrichtung 16 gemeldet. Die Winkelwerte werden bei einer vorteilhaften Ausführungsform der Vorrichtung ebenfalls aus dem Speicher 26 ausgelesen. Die anstehenden Istwerte dienen zur Ermittlung der neuen Arbeitspunkte des Wechselrichters 2.

Mit Hilfe des erfindungsgemäßen Verfahrens und der Vorrichtung zur Durchführung dieses Verfahrens besteht nun die Möglichkeit, die Oberschwingungs-Netzrückwirkungen eines selbstgeführten, grundfrequenzgetakteten Multilevel-Wechselrichters jederzeit minimal zu halten.

## Patentansprüche

1. Verfahren zur Reduzierung von Oberschwingungs-Netzrückwirkungen einer selbstgeführten, grundfrequenzgetakteten Multilevel-Wechselrichteranlage (2), die zwei Multilevel-Wechselrichter (4,6) mit kapazitiven Speichern (18, 20), einen Transformator (22) und eine Drehstrom-Saugdrosselschaltung (8) aufweist, wobei beim Verlassen eines vorbestimmten Arbeitspunktes dieser Multilevel-Wechselrichteranlage (2) einerseits die Winkelwerte für Zu- und Abschaltzeitpunkte der einzelnen Spannungsstufen der Multilevel-Wechselrichter (4,6) für einen neu bestimmten Arbeitspunkt berechnet werden und andererseits eine Anschlußspannung ($u'_{R,S,T}$) dieser Multilevel-Wechselrichteranlage (2) an eine Änderung der Grundschwingungsamplitude der Wechselrichter-Ausgangsspannung ($u_{SRR,S,T}$) angepaßt wird.

2. Verfahren nach Anspruch 1, wobei vorbestimmte Winkelwerte für verschiedene Arbeitspunkte der Multilevel-Wechselrichteranlage (2) abgespeichert sind, die in Abhängigkeit eines neuen Arbeitspunktes aufgerufen und als Steuersignale ($S_{1v}, S_{2v}$) den Multilevel-Wechselrichtern (4, 6) zugeführt werden.

3. Verfahren nach Anspruch 1, wobei vorbestimmte Anpassungsänderungswerte für verschiedene Arbeitspunkte der Multilevel-Wechselrichteranlage (2) abgespeichert sind, die in Abhängigkeit eines neuen arbeitspunktes aufgerufen und als Stellsignal ($S_{St}$) einer Einrichtung (10) zur Anpassung der Anschlußspannung ($u'_{R,S,T}$) der Multilevel-Wechselrichteranlage (2) an eine geänderte Grundschwingungsamplitude der Wechselrichter-Ausgangsspannung ($u_{SRR,S,T}$) zugeführt werden.

4. Vorrichtung zur Durchführung des Verfahrens nach Anspruch 1 für eine selbstgeführte, grundfrequenzgetaktete Multilevel-Wechselrichteranlage (2), die zwei Multilevel-Wechselrichter (4,6) mit kapazitiven Speichern (18, 20), einen Transformator (22) und eine Drehstrom-Saugdrosselschaltung (8) aufweist, mit einer Steuer- und Regeleinrichtung (16), die Steuersignale ($S_{1v}, S_{2v}$) für die Multilevel-Wechselrichter (4, 6) generiert, wobei diese Multilevel-Wechselrichteranlage (2) mittels einer Einrichtung (10) zur Anpassung seiner Anschlußspannung ($u'_{R,S,T}$) mit einem Drehstromnetz (12) verknüpft ist, wobei diese Einrichtung (10) den Transformator (22) und einen Stufenschalter (24) aufweist, wobei die Steuer- und Regeleinrichtung (16) mittels einer Steuerleitung mit diesem Stufenschalter (24) der Einrichtung (10) verknüpft ist und wobei an den Istwert-Eingängen der Steuer- und Regeleinrichtung (16) die Strom- und Spannungs-Istwerte ($i_{R01,S01,T01}$, $i_{R02,S02,T02}$, $i_{R,S,T}$, $u_{R01,S01,T01}$,

$u_{R02,S02,T02}$, $u_{R,S,T}$) der Multilevel-Wechselrichter (4,6) und des Drehstromnetzes (12) und ein Zustandssignal ($S_{MSt}$) der Einrichtung (10) zur Anpassung anstehen.

5. Vorrichtung nach Anspruch 4, wobei die Steuer- und Regeleinrichtung (16) mit einem Speicher (26) mit vorbestimmten Winkelwerten für verschiedene Arbeitspunkte versehen ist.

6. Vorrichtung nach Anspruch 4, wobei die steuer- und Regeleinrichtung (16) mit einem Speicher (28) mit Anpassungsänderungswerten für verschieden Arbeitspunkte versehen ist.

7. Vorrichtung nach Anspruch 4, wobei der Stufenschalter (24) der Einrichtung (10) zur Anpassung Bestandteil eines Dreiwicklungstransformators (48) ist, dessen Sekundärwicklungen (44,46) jeweils mit den Ausgängen der Multilevel-Wechselrichter (4,6) und dessen Primärwicklung (50) mit dem Drehstromnetz (12) verknüpft sind.

## Claims

1. Method for reducing harmonics mains-power-supply perturbations of a self-commutated multilevel invertor installation (2) which is clocked at the fundamental frequency and has two multilevel invertors (4, 6) having capacitive storage devices (18, 20), a transformer (22) and a three-phase drainage coil circuit (8), wherein, when a predetermined operating point of this multilevel invertor installation (2) is left, the angular values for turn-on and turn-off instants of the individual voltage levels of the multilevel invertors (4, 6) are calculated for a newly determined operating point, on the one hand, and, on the other hand, a terminal voltage ($u'_{R,S,T}$) of this multilevel invertor installation (2) is matched to a change in the fundamental amplitude of the invertor output voltage ($u_{SRR,S,T}$).

2. Method according to Claim 1, wherein predetermined angular values for different operating points of the multilevel invertor installation (2) are stored, are called up as a function of a new operating point and are fed as control signals ($S_{1v}, S_{2v}$) to the multilevel invertors (4, 6).

3. Method according to Claim 1, wherein predetermined matching change values for different operating points of the multilevel invertor installation (2) are stored, are called up as a function of a new operating point and are fed as actuating signal ($S_{St}$) to a device (10) for matching the terminal voltage ($u'_{R,S,T}$) of the multilevel invertor installation (2) to a changed fundamental amplitude of the invertor output voltage ($u_{SRR,S,T}$).

4. Apparatus for carrying out the method according to Claim 1 for a self-commutated multilevel invertor installation (2) which is clocked at the fundamental frequency and has two multilevel invertors (4, 6) having capacitive storage devices (18, 20), a transformer (22) and a three-phase drainage coil circuit (8), having a control and regulating device (16), which generates control signals ($S_{1v}$, $S_{2v}$) for the multilevel invertors (4, 6), wherein this multilevel invertor installation (2) is linked to a three-phase mains power supply (12) by means of a device (10) for matching the terminal voltage ($u'_{R,S,T}$) of said multilevel invertor installation, wherein this device (10) has the transformer (22) and a tap switch (24), wherein the control and regulating device (16) is linked to this tap switch (24) of the device (10) by means of a control line, and wherein the actual current and voltage values ($i_{R01,S01,T01}$, $i_{R02,S02,T02}$, $i_{R,S,T}$, $u_{R01,S01,T01}$, $u_{R02,S02,T02}$ and $u_{R,S,T}$) of the multilevel invertors (4, 6) and of the three-phase mains power supply (12) and a status signal ($S_{MSt}$) of the matching device (10) are present at the actual value inputs of the control and regulating device (16).

5. Apparatus according to Claim 4, wherein the control and regulating device (16) is provided with a memory (26) containing predetermined angular values for different operating points.

6. Apparatus according to Claim 4, wherein the control and regulating device (16) is provided with a memory (28) containing matching change values for different operating points.

7. Apparatus according to Claim 4, wherein the tap switch (24) of the matching device (10) is a component part of a three-winding transformer (48) whose secondary windings (44, 46) are respectively linked to the outputs of the multilevel invertors (4, 6) and whose primary winding (50) is linked to the three-phase mains power supply (12).

## Revendications

1. Procédé de réduction des perturbations du système d'harmoniques d'une installation (2) à onduleurs autocommutée, à niveaux multiples et à fréquence fondamentale, qui comporte deux onduleurs à niveaux multiples (4, 6) ayant des mémoires capacitives (18, 20), un transformateur (22) et un circuit à bobine égalisatrice en triphasé (8), dans lequel, lorsque cette installation (2) à onduleurs à niveaux multiples quitte un point de fonctionnement prédéterminé, on calcule d'une part les valeurs angulaires des instants de branchement et de débranchement des niveaux de tension des onduleurs à niveaux multiples (4, 6) pour un nouveau point de fonctionnement déterminé et d'autre part on adapte une tension de réseau ($u'_{R,S,T}$) de cette installation (2) à onduleurs à niveaux multiples à une modification de l'amplitude de composante fondamentale de la tension de sortie d'onduleur ($u_{SRR,S,T}$).

2. Procédé selon la revendication 1, dans lequel on mémorise des valeurs angulaires prédéterminées pour divers points de fonctionnement de l'installation (2) à onduleurs à niveaux multiples, lesquelles valeurs sont appelées en fonction d'un nouveau point de fonctionnement et sont envoyées comme signaux de commande ($S_{1v}$, $S_{2v}$) aux onduleurs à niveaux multiples (4, 6).

3. Procédé selon la revendication 1, dans lequel on mémorise des valeurs de variation d'adaptation prédéterminées pour divers points de fonctionnement de l'installation (2) à onduleurs à niveaux multiples, lesquelles valeurs sont appelées en fonction d'un nouveau point de fonctionnement et sont envoyées comme signal réglant ($S_{st}$) à un dispositif (10) destiné à l'adaptation de la tension de réseau ($u'_{R,S,T}$) de l'installation (2) à onduleurs à niveaux multiples à une amplitude de composante fondamentale modifiée de la tension de sortie d'onduleur ($u_{SRR,S,T}$).

4. Dispositif pour la mise en oeuvre du procédé selon la revendication 1 pour une installation (2) à onduleurs autocommutée, à niveaux multiples et à fréquence fondamentale, qui comporte deux onduleurs à niveaux multiples (4, 6) ayant des mémoires capacitives (18, 20), un transformateur (22) et un circuit à bobine égalisatrice en triphasé (8), un dispositif de commande et de régulation (16) qui produit des signaux de commande ($S_{1v}$, $S_{2v}$) pour les onduleurs à niveaux multiples (4, 6), cette installation (2) à onduleurs à niveaux multiples étant reliée à un réseau triphasé (12) au moyen d'un dispositif (10) destiné à l'adaptation de sa tension de réseau ($u'_{R,S,T}$), ce dispositif (10) comportant le transformateur (22) et un graduateur de réglage en charge (24), le dispositif de commande et de régulation (16) étant relié à ce graduateur de réglage en charge (24) du dispositif (10) au moyen d'une ligne de commande et les valeurs réelles de courant et de tension ($i_{R01,S01,T01}$, $i_{R02,S02,T02}$, $i_{R,S,T}$, $u_{R01,S01,T01}$, $u_{R02,S02,T02}$, $u_{R,S,T}$) des onduleurs à niveaux multiples (4, 6) et du réseau triphasé (12) ainsi qu'un signal d'état ($S_{MSt}$) du dispositif d'adaptation (10) se trouvant aux entrées de valeurs réelles du dispositif de commande et de régulation (16).

5. Dispositif selon la revendication 4, dans lequel le dispositif de commande et de régulation (16) est muni d'une mémoire (26) avec des valeurs angulaires prédéterminées pour divers points de fonctionnement.

6. Dispositif selon la revendication 4, dans lequel le dispositif de commande et de régulation (16) est muni d'une mémoire (28) avec des valeurs de variation d'adaptation pour divers points de fonctionnement.

7. Dispositif selon la revendication 4, dans lequel le graduateur de réglage en charge (24) du dispositif d'adaptation (10) fait partie d'un transformateur à trois enroulements (48), dont les enroulements secondaires (44, 46) sont reliés respectivement aux sorties des onduleurs à niveaux multiples (4, 6) et dont l'enroulement primaire (50) est relié au réseau triphasé (12).

FIG 1

FIG 2

FIG 3

FIG 4

FIG 5

FIG 6

FIG 7

FIG 8